# EUROPEAN PATENT APPLICATION

(11) **EP 4 852 213 A1**
(43) Date of publication of application: **09.12.2026**
(21) Application number: 25747636.6
(22) Date of filing: 21.01.2025
(51) Int. Cl.: H01M 50/636, H01M 50/502, H01M 50/186, H01M 50/317

(54) **BATTERY CELL AND ELECTRICAL DEVICE**

(30) Priority: 29.01.2024 CN 202410121864
(71) Applicant: Ningde Amperex Technology Limited, Ningde, Fujian 352100 (CN)
(72) Inventor: ZHANG, Guowen, Ningde, Fujian 352100 (CN); CHEN, Mingqi, Ningde, Fujian 352100 (CN)
(74) Representative: Kraus & Lederer PartGmbB
(86) International application number: PCT/CN2025/073609
(87) International publication number: WO 2025/162064

(57) **Abstract**

This application discloses a battery cell and an electrical device. The battery cell includes a housing and a pressure relief assembly. The housing defines an accommodation space and is provided with an injection hole in communication with the accommodation space. The pressure relief assembly covers the injection hole. The pressure relief assembly includes an intermediate connector, a sealing member, and a pressure relief member. The housing, the intermediate connector, the sealing member, and the pressure relief member are sequentially stacked along a first direction. The intermediate connector includes a first main portion and a first weld mark portion. A projection of the sealing member projected onto the intermediate connector along the first direction is a first projection, and the first projection lies within the first main portion. The first weld mark portion is disposed around a periphery of the first projection. The first weld mark portion is spaced apart from the first projection. The first weld mark portion is welded to the housing. The battery cell provided herein is of high safety.

## Description

This application claims priority to Chinese Patent Application No. 202410121864.2, filed with China National Intellectual Property Administration on January 29, 2024 and entitled "BATTERY CELL AND ELECTRICAL DEVICE", which is incorporated herein by reference in its entirety.

### TECHNICAL FIELD

This application relates to the technical field of electrical energy storage, and in particular, to a battery cell and an electrical device.

### BACKGROUND

A battery cell is a device that converts external energy into electrical energy and stores the energy internally so that the electrical energy can be supplied to an external device (such as a portable electronic device) when necessary. In the related art, the battery cell includes a housing. The housing is provided with an injection hole. An electrolyte may be injected into the housing through the injection hole, and the injection hole is subsequently sealed with a pressure relief assembly. If the pressure relief assembly is damaged during assembling of the battery cell, when the battery cell is in a thermal runaway state, a large amount of gas is generated inside the battery cell. The damaged pressure relief assembly is unable to promptly relieve pressure in the housing, thereby causing the battery cell to explode and impairing the safety of the user.

Accordingly, it is necessary to design a battery cell and an electrical device to address the above technical problem.

### SUMMARY

Some embodiments of this application provide a battery cell and an electrical device to improve safety of the battery cell.

According to a first aspect, an embodiment of this application provides a battery cell. The battery cell includes:
a housing, defining an accommodation space, and provided with an injection hole in communication with the accommodation space; and
a pressure relief assembly, covering the injection hole, where the pressure relief assembly includes an intermediate connector, a sealing member, and a pressure relief member; the housing, the intermediate connector, the sealing member, and the pressure relief member are sequentially stacked along a first direction; the intermediate connector includes a first main portion and a first weld mark portion; a projection of the sealing member projected onto the intermediate connector along the first direction is a first projection, and the first projection lies within the first main portion; the first weld mark portion is disposed around a periphery of the first projection; the first weld mark portion is spaced apart from the first projection; and the first weld mark portion is welded to the housing.

In some embodiments, a minimum spacing between the first projection and the first weld mark portion is d3, and d3 ranges from 0.02 mm to 0.25 mm.

In some embodiments, d3 ranges from 0.05 mm to 0.18 mm.

In some embodiments, the intermediate connector further includes an edge portion. The first main portion, the first weld mark portion, and the edge portion are sequentially arranged from inside outward.

In some embodiments, the housing includes a housing wall and a second weld mark portion. The second weld mark portion is embedded in the housing wall and is connected to the first weld mark portion.

In some embodiments, the first weld mark portion includes a first surface close to the housing and a second surface facing away from the housing. A projection of the first surface along the first direction lies within a projection of the second surface along the first direction.

In some embodiments, the projection of the first surface along the first direction covers the second weld mark portion.

In some embodiments, a dimension of the first weld mark portion along a second direction is a width of the first weld mark portion. The width of the first weld mark portion gradually decreases along a direction from the pressure relief member toward the housing. A dimension of the second weld mark portion along the second direction is a width of the second weld mark portion. The width of the second weld mark portion gradually decreases along the direction from the pressure relief member toward the housing. The second direction is perpendicular to the first direction.

In some embodiments, a width of the second surface is d1, and d1 ranges from 70 µm to 150 µm.

In some embodiments, a width of the surface, facing away from the housing, of the second weld mark portion is d2, and d2 ranges from 30 µm to 80 µm.

In some embodiments, a length of the second weld mark portion along the first direction is H2, a length of the housing wall along the first direction is H3, and H2 and H3 satisfy 30 µm ≤ H2 ≤ 0.8 × H3.

In some embodiments, a minimum spacing between an edge of the intermediate connector and the first weld mark portion is d4, and d4 ranges from 0.02 mm to 0.22 mm.

In some embodiments, the intermediate connector is provided with a first through-hole in communication with the injection hole. The sealing member is provided with a second through-hole in communication with the injection hole. The pressure relief member covers the second through-hole.

In some embodiments, the projection of the sealing member projected onto the intermediate connector along the first direction partially falls within the first through-hole.

In some embodiments, an edge of the sealing member is located outward of a projection of the pressure relief member projected onto the sealing member along the first direction.

In some embodiments, a projection of the intermediate connector projected onto the housing along the first direction partially falls within the injection hole.

In some embodiments, an outer diameter of the sealing member ranges from 2.5 mm to 3.0 mm, an inner diameter of the sealing member ranges from 0.6 mm to 1.0 mm, and a thickness of the sealing member along the first direction ranges from 0.03 mm to 0.07 mm.

In some embodiments, the sealing member includes a first adhesive layer, a second adhesive layer, and a third adhesive layer sequentially arranged along the first direction. A melting point of the second adhesive layer is higher than a melting point of the first adhesive layer. The melting point of the second adhesive layer is higher than a melting point of the third adhesive layer.

According to a second aspect, an embodiment of this application further provides an electrical device. The electrical device includes the battery cell according to the second aspect. The battery cell is configured to provide electrical energy.

In some embodiments, the electrical device includes a shell. The shell includes an accommodation space and a clearance space that communicate with each other. The battery cell is partially snap-fitted into the accommodation space, and a recess is snap-fitted into the clearance space.

Compared with the related art, in the battery cell and electrical device provided herein, the first weld mark portion is welded to the housing, such that the housing is stably connected to the intermediate connector, thereby preventing an electrolyte from leaking out of the housing through a clearance between the housing and the first weld mark portion. The sealing member is stacked between the first main portion and the pressure relief member, such that the intermediate connector is stably connected to the pressure relief member, thereby preventing the electrolyte from leaking out of the housing through a clearance between the intermediate connector and the pressure relief member. The projection of the sealing member projected onto the intermediate connector along the first direction is located within the first main portion and is spaced apart from the first weld mark portion. In this way, during welding between the first weld mark portion and the housing, the welded region is separated from the sealing member by a specified distance. This arrangement can avoid or reduce damage to the pressure relief assembly caused by a welding operation that interferes with the sealing member in connecting the intermediate connector and the pressure relief member during welding between the first weld mark portion and the housing, thereby improving the operational safety of the prepared battery cell.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic perspective view of a battery cell according to an embodiment of this application;
FIG. 2 is a schematic exploded view of a battery cell according to an embodiment of this application;
FIG. 3 is a schematic diagram of a partial cross-sectional structure of a battery cell according to an embodiment of this application;
FIG. 4 is a schematic diagram of a partial cross-sectional structure of a battery cell according to an embodiment of this application;
FIG. 5 is a schematic diagram of a partial cross-sectional structure of a battery cell according to an embodiment of this application;
FIG. 6 is a scanning electron microscope (SEM) image of a partial cross-sectional structure of a sealing member according to an embodiment of this application;
FIG. 7 is a schematic perspective view of a battery cell according to an embodiment of this application;
FIG. 8 is an enlarged view of a part A shown in FIG. 7; and
FIG. 9 is an SEM image of a partial cross-sectional structure of a battery cell according to an embodiment of this application.

List of reference signs:
1. housing; 11. injection hole; 12. housing wall; 13. second weld mark portion; 14. accommodation space; 15. upper cover; 16. lower cover; 17. recess;
2. pressure relief assembly; 21. intermediate connector; 211. first main portion; 212. first weld mark portion; 2121. first surface; 2122. second surface; 213. edge portion; 214. first through-hole; 22. sealing member; 221. second through-hole; 224. first adhesive layer; 222. second adhesive layer; 223. third adhesive layer; 23. pressure relief member.
X. first direction; Y. second direction; Z. third direction

### DETAILED DESCRIPTION

The following describes features and exemplary embodiments in detail according to each aspect of this application. In the following detailed description, many details are provided to enable a comprehensive understanding of this application. However, it is apparent to a person skilled in the art that this application can be implemented without some of the details. The following description of the embodiments is merely intended to enable a better understanding of this application by illustrating examples of this application.

It is hereby noted that to the extent that no conflict occurs, embodiments of this application and the features in the embodiments may be combined with each other. The following describes some embodiments of this application in detail with reference to drawings.

According to a first aspect, this application provides a battery cell. For better understanding of the technical solutions and technical effects of this application, the following describes some embodiments of this application in detail with reference to drawings.

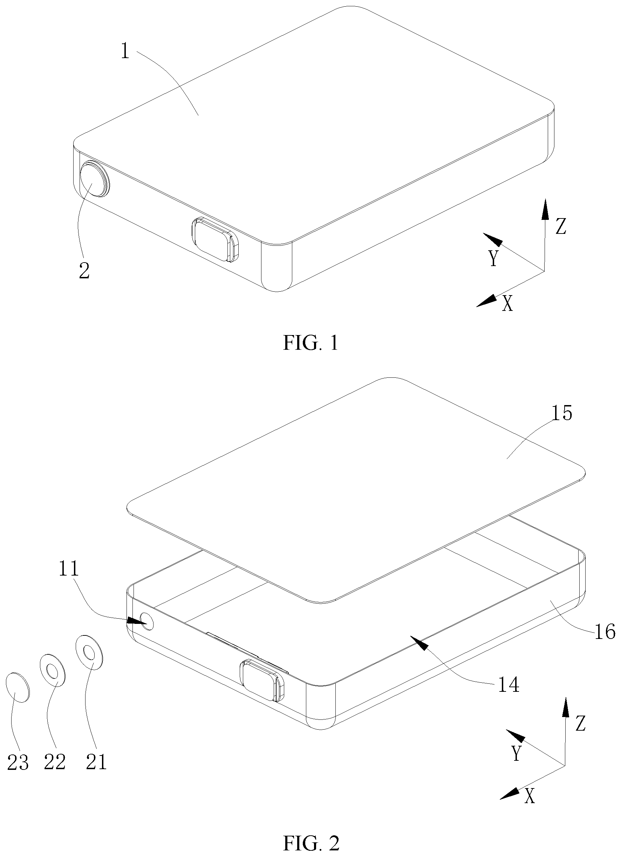

Referring to FIG. 1, FIG. 2, and FIG. 3, a battery cell includes a housing 1 and a pressure relief assembly 2. The housing 1 defines an accommodation space 14 and is provided with an injection hole 11 in communication with the accommodation space 14. The pressure relief assembly 2 covers the injection hole 11. The pressure relief assembly 2 includes an intermediate connector 21, a sealing member 22, and a pressure relief member 23. The housing 1, the intermediate connector 21, the sealing member 22, and the pressure relief member 23 are sequentially stacked along a first direction X. The intermediate connector 21 includes a first main portion 211 and a first weld mark portion 212. A projection of the sealing member 22 projected onto the intermediate connector 21 along the first direction X is a first projection. The first projection lies within the first main portion 211. The first weld mark portion 212 is disposed around the periphery of the first projection. The first weld mark portion 212 is spaced apart from the first projection. The first weld mark portion 212 is welded to the housing 1.

The battery cell provided herein may be specifically a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell.

The housing 1 includes an upper cover 15 and a lower cover 16. The upper cover 15 and the lower cover 16 are joined together to define an accommodation space 14 of the housing 1. A battery cell may be disposed in the accommodation space 14. The battery cell includes a positive electrode plate, a negative electrode plate, and a separator. In the battery cell, the parts coated with an active material constitute a positive electrode plate and a negative electrode plate of the battery cell, and the parts coated with no active material constitute tabs. An electrolyte may be injected into the accommodation space 14 through the injection hole 11, such that the positive electrode plate, the negative electrode plate, and the separator are immersed in the electrolyte. In some embodiments, the positive electrode plate, the negative electrode plate, and the separator are wound together to form a winding structure. In other embodiments, the positive electrode plate, the separator, and the negative electrode plate are stacked in sequence to form a stacked structure. A person skilled in the art may select an appropriate battery cell as needed. In a charge-discharge process of the battery cell, a positive active material and a negative active material react with an electrolyte. The tabs are configured to connect to electrode terminals to form a current loop. The electrode terminals extend out from one end of the housing 1.

The housing 1 may include a top wall and a bottom wall arranged along the thickness direction Z, and a sidewall connecting the top wall and the bottom wall. The injection hole 11 may be provided in the sidewall. The first direction X may be a length direction or a width direction of the housing 1.

The pressure relief assembly 2 is welded to the housing 1 through an intermediate connector 21, such that the pressure relief assembly 2 seals the injection hole 11 and prevents the electrolyte in the housing 1 from leaking. The sealing member 22 is made of a material with a preset melting point. The preset melting point may be lower than the melting point of the intermediate connector 21 and/or lower than the melting point of the pressure relief member 23. When the battery cell is in a thermal runaway state, the temperature of the sealing member 22 reaches the preset melting point, thereby causing the sealing member 22 to melt to form a pressure relief passage between the intermediate connector 21 and the pressure relief member 23. The internal pressure within the housing 1 is relieved through the pressure relief passage, thereby avoiding or reducing the occurrence of explosion of the battery cell.

The intermediate connector 21 may be in the form of a metal sheet to facilitate welding of the intermediate connector 21 to the housing 1. The intermediate connector 21 may be a nickel sheet with a passivation layer. The passivation layer may be a chromium oxide layer. Alternatively, the pressure relief member 23 may be in the form of a metal sheet to make it convenient for the sealing member 22 to connect the intermediate connector 21 and the pressure relief member 23. The pressure relief member 23 may be a nickel sheet containing a passivation layer. The passivation layer may be a chromium oxide layer. A cleaned nickel sheet may be immersed in a chromate solution to form a chromium oxide passivation layer on the surface of the nickel sheet. Optionally, the thickness of the passivation layer ranges from 10 nm to 150 nm. The passivation layer can reduce or avoid corrosion of the intermediate connector 21 and the pressure relief member 23 caused by the electrolyte. The intermediate connector 21 and the pressure relief member 23 may be prepared from different materials, such that the intermediate connector 21 and the pressure relief member 23 possess different physical and chemical properties. Alternatively, the intermediate connector 21 and the pressure relief member 23 may be prepared from the same material, thereby simplifying the preparation process.

During preparation of a battery cell, the intermediate connector 21, the sealing member 22, and the pressure relief member 23 may be sequentially stacked to pre-assemble a pressure relief assembly 2. The pre-assembled pressure relief assembly 2 is then welded to the housing 1 such that the pressure relief assembly 2 seals the injection hole 11.

As an example, during preparation of a battery cell, the intermediate connector 21, the sealing member 22, and the pressure relief member 23 are sequentially stacked to pre-assemble a pressure relief assembly 2. The battery cell is placed in the housing 1, and an electrolyte is injected into the housing 1 through the injection hole 11. An image showing the injection hole 11 is acquired, and the injection hole 11 in the image is identified to obtain first coordinate information of the injection hole 11. Second coordinate information is then obtained based on a preset offset coordinate and the first coordinate information. The pre-assembled pressure relief assembly 2 is controlled, based on the second coordinate information, to be positioned on one side of the injection hole 11, such that the pressure relief assembly 2 covers the injection hole 11. An image showing the intermediate connector 21 is acquired, and the intermediate connector 21 in the image is identified to obtain third coordinate information for welding. A carrier carrying the housing 1 is moved to a position opposite to a laser galvanometer scanner, and a welding gun is controlled, based on the third coordinate information, to direct a laser beam onto a position corresponding to the first weld mark portion 212 in the intermediate connector 21, so as to perform welding and form a first weld mark portion 212 welded to the housing 1.

In this embodiment, the first weld mark portion 212 is welded to the housing 1, such that the housing 1 is stably connected to the intermediate connector 21, thereby preventing an electrolyte from leaking out of the housing 1 through a clearance between the housing 1 and the first weld mark portion 212. The sealing member 22 is stacked between the first main portion 211 and the pressure relief member 23, such that the intermediate connector 21 is stably connected to the pressure relief member 23, thereby preventing the electrolyte from leaking out of the housing 1 through a clearance between the intermediate connector 21 and the pressure relief member 23. The projection of the sealing member 22 projected onto the intermediate connector 21 along the first direction X is located within the first main portion 211 and is spaced apart from the first weld mark portion 212. In this way, during welding of the first weld mark portion 212 to the housing 1, the welded region is separated from the sealing member 22 by a specified distance. This arrangement can avoid or reduce damage to the pressure relief assembly 2 caused by a welding operation that interferes with the sealing member 22 in connecting the intermediate connector 21 and the pressure relief member 23 during welding between the first weld mark portion 212 and the housing 1, thereby improving the operational safety of the prepared battery cell.

In some embodiments, the intermediate connector 21 further includes an edge portion 213. The first main portion 211, the first weld mark portion 212, and the edge portion 213 are sequentially arranged from inside outward.

The first weld mark portion 212 may extend through the intermediate connector 21 along the first direction X. The first weld mark portion 212 is disposed around the first main portion 211. The edge portion 213 is disposed around the first weld mark portion 212. The sealing member 22 does not overlap the first weld mark portion 212 or the edge portion 213 in the first direction X. In this way, during welding of the intermediate connector 21 to the housing 1, a welding gun can directly act on a region in which the first weld mark portion 212 is located, thereby facilitating the welding operation. During a welding operation, the welding gun may weld the housing 1 and the intermediate connector 21 together along a boundary between the first main portion 211 and the edge portion 213, thereby forming a first weld mark portion 212 at the boundary between the first main portion 211 and the edge portion 213.

The edge portion 213 is provided outside the first weld mark portion 212, such that a region available for the welding gun to form the first weld mark portion 212 is sufficiently large, thereby preventing unstable connection between the first weld mark portion 212 and the housing 1 caused by welding position errors during a welding operation.

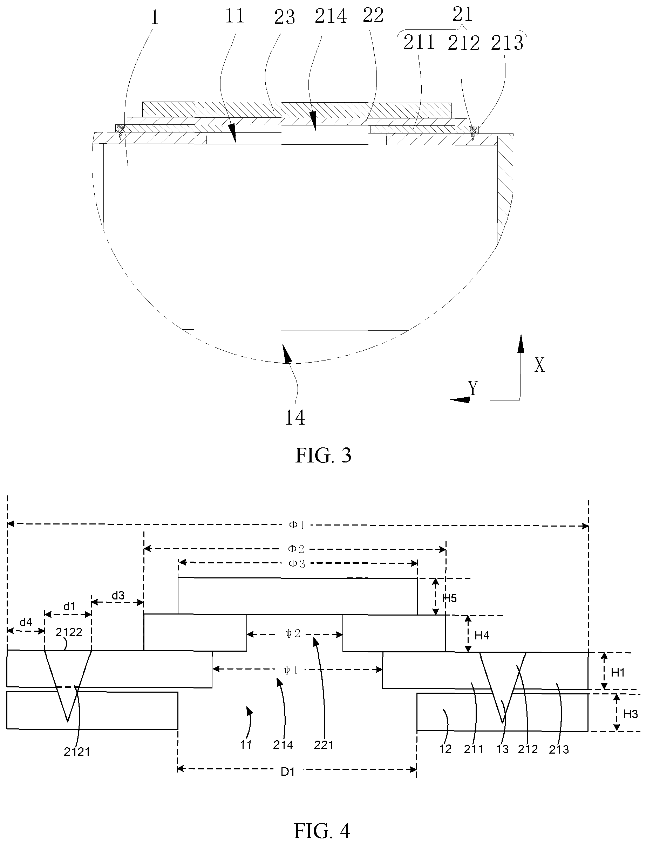

Referring to FIG. 4, in some embodiments, the housing 1 includes a housing wall 12 and a second weld mark portion 13. The second weld mark portion 13 is embedded in the housing wall 12 and is connected to the first weld mark portion 212.

When the welding gun acts on the intermediate connector 21, heat is conducted through the intermediate connector 21 to the housing 1, causing a part of the housing 1 to melt to form a second weld mark portion 13 connected to the first weld mark portion 212. The parameters of the welding gun are controlled such that the resulting second weld mark portion 13 is embedded in the housing wall 12 without leaving the second weld mark portion 13 to run through the housing wall 12, so as to avoid overwelding and prevent the welding operation from interfering with the electrolyte, the battery cell, and other components within the housing 1.

In some embodiments, the first weld mark portion 212 includes a first surface 2121 close to the housing 1 and a second surface 2122 facing away from the housing 1. A projection of the first surface 2121 along the first direction X lies within a projection of the second surface 2122 along the first direction X.

The area of the second surface 2122 is larger than the area of the first surface 2121. During a welding operation, the welding gun may act on a surface, facing away from the housing 1, of the intermediate connector 21. The heat generated by the welding gun is conducted from the surface, facing away from the housing 1, of the intermediate connector 21 to a surface, close to the housing 1, of the intermediate connector 21. In this way, the projection of the first surface 2121 projected onto the housing 1 along the first direction X lies within the projection of the second surface 2122 projected onto the housing 1 along the first direction X. In other words, the first weld mark portion 212 forms a structure with one end being larger than the other end along the first direction X. The welding gun acts on the second surface 2122, thereby facilitating the welding operation.

In some embodiments, the projection of the first surface 2121 along the first direction X covers the second weld mark portion 13.

The first surface 2121 is connected to the second weld mark portion 13, thereby increasing the area of the first surface 2121, and in turn, improving the stability of the connection between the intermediate connector 21 and the housing 1. During a welding operation, the welding gun may act on the second surface 2122, and thermal energy is conducted from the first weld mark portion 212 to the second weld mark portion 13. In this way, the projection of the first surface 2121 along the first direction X covers the second weld mark portion 13 on the housing 1. In other words, the width of the first weld mark portion 212 is greater than the width of the second weld mark portion 13. The first weld mark portion 212 is smaller than the second weld mark portion 13 in size, thereby preventing the process of forming the second weld mark portion 13 from interfering with the electrolyte and the electrode assembly.

In some embodiments, a dimension of the first weld mark portion 212 along a second direction Y is a width of the first weld mark portion 212. The width of the first weld mark portion 212 gradually decreases along a direction from the pressure relief member 23 toward the housing 1. A dimension of the second weld mark portion 13 along the second direction Y is a width of the second weld mark portion 13. The width of the second weld mark portion 13 gradually decreases along the direction from the pressure relief member 23 toward the housing 1. The first direction X is perpendicular to the second direction Y.

When the intermediate connector 21 is annular, the second direction Y may be a radial direction of the intermediate connector 21. The width of the first weld mark portion 212 gradually decreases along a direction from the pressure relief member 23 toward the housing 1. The width of the second weld mark portion 13 gradually decreases along the direction from the pressure relief member 23 toward the housing 1, such that a cross-section of the first weld mark portion 212 taken along the first direction X and a cross-section of the second weld mark portion 13 taken along the first direction X can be triangular. In the direction from the first weld mark portion 212 toward the second weld mark portion 13, the width of the second weld mark portion 13 of the first weld mark portion 212 gradually decreases along the direction from the pressure relief member 23 toward the housing 1, thereby reducing the adverse effect of the formation process of the second weld mark portion 13 on the electrolyte and the battery cell.

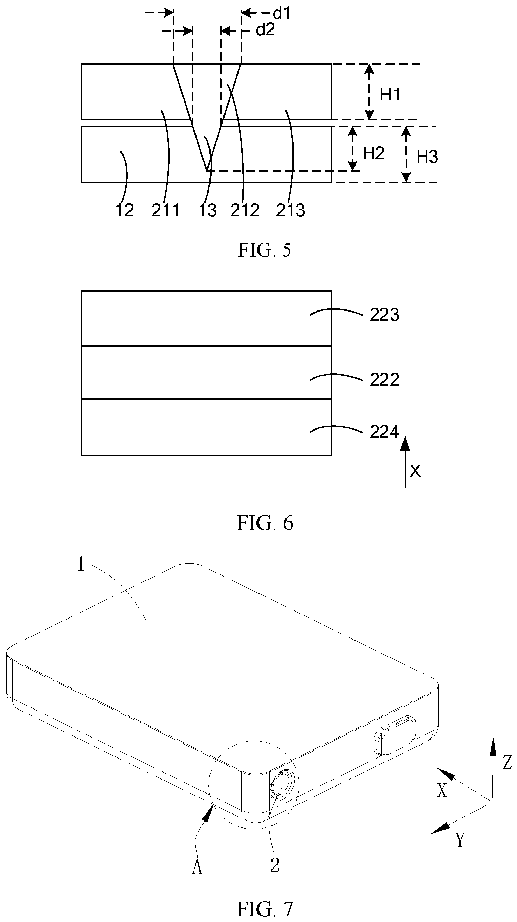

Referring to FIG. 5, in some embodiments, the width of the second surface 2122 is d1, and d1 ranges from 70 µm to 150 µm.

The width of the second surface 2122 is d1, and if d1 is excessively small, the ability of the first weld mark portion 212 to conduct heat to the second weld mark portion 13 is adversely affected, thereby reducing the connection area between the first weld mark portion 212 and the second weld mark portion 13. If d1 is excessively large, the spacing between the first weld mark portion 212 and the sealing member 22 is adversely affected. By setting d1 to range from 70 µm to 150 µm, it is ensured that the first weld mark portion 212 and the second weld mark portion 13 formed during the welding are stably connected, and that a sufficiently large spacing between the first weld mark portion 212 and the sealing member 22 is maintained, thereby avoiding or reducing structural changes of the sealing member 22 caused by heat-induced melting of the sealing member 22 during a welding operation. Optionally, d1 ranges from 90 µm to 120 µm.

In some embodiments, the width of the surface, facing away from the housing 1, of the second weld mark portion 13 is d2, and d2 ranges from 30 µm to 80 µm. This configuration can further ensure a stable connection between the first weld mark portion 212 and the second weld mark portion 13 while reducing the thermal impact on the sealing member 22.

The width of the surface, facing away from the housing 1, of the second weld mark portion 13 is d2. If d2 is excessively small, the stability of the connection between the first weld mark portion 212 and the second weld mark portion 13 is adversely affected. If d2 is excessively large, the resulting second weld mark portion 13 is excessively deep and prone to penetrate through the housing wall 12 to come into contact with the electrolyte, thereby adversely affecting the quality of the battery cell. By setting d1 to range from 30 µm to 80 µm, this application ensures a stable connection between the first weld mark portion 212 and the second weld mark portion 13 formed during the welding, and ensures sufficiently small dimensions of the second weld mark portion 13, thereby avoiding or reducing the adverse effect of the formation of the second weld mark portion 13 on the electrolyte and the battery cell. Optionally, d2 ranges from 40 µm to 70 µm.

In some embodiments, the length of the second weld mark portion 13 along the first direction X is H2, the length of the housing wall 12 along the first direction X is H3, and 30 µm ≤ H2 ≤ 0.8 × H3.

The length of the first weld mark portion 212 along the first direction X is H1. Because the first weld mark portion 212 runs through the first main portion 211, H1 may be equal to the length of the intermediate connector 21 along the first direction X. The second weld mark portion 13 is embedded in the housing wall 12 on which an injection hole 11 is formed in the housing 1, such that the length H2 of the second weld mark portion 13 along the first direction X is less than the length H3 of the housing wall 12 along the first direction X. If H2 is excessively small, the stability of the connection between the housing 1 and the second weld mark portion 13 is adversely affected. If H2 is excessively large, the resulting second weld mark portion 13 is excessively deep and leads to overwelding. By setting 30 µm ≤ H2 ≤ 0.8 × H3, this application ensures a stable connection between the first weld mark portion 212 and the second weld mark portion 13 formed during the welding, and ensures sufficiently small dimensions of the second weld mark portion 13, thereby avoiding or reducing the adverse effect of the formation of the second weld mark portion 13 on the electrolyte and the battery cell. Optionally, 30 µm ≤ H2 ≤ 80 µm.

In some embodiments, a minimum spacing d3 between the first projection and the first weld mark portion 212 ranges from 0.02 mm to 0.25 mm.

If d3 is excessively small, the heat generated during formation of the first weld mark portion 212 is prone to be conducted to the sealing layer, thereby reducing the reliability of the sealing layer. If d3 is excessively large, the size of the intermediate connector 21 becomes excessively large or the size of the sealing member 22 becomes excessively small. An excessively large intermediate connector 21 is unfavorable for miniaturization of the battery cell. An excessively small sealing member 22 results in insufficient pressure-relief capability of the pressure relief passage formed by the molten sealing member 22 under a thermal runaway condition. By setting d3 to range from 0.02 mm to 0.25 mm, this application reduces or avoids the adverse effect of the heat generated during a welding process on the reliability of the sealing layer, and achieves suitable dimensions of the intermediate connector 21 and sealing member 22. Optionally, d3 ranges from 0.05 mm to 0.18 mm.

In some embodiments, the minimum spacing between an edge of the intermediate connector 21 and the first weld mark portion 212 is d4, ranging from 0.02 mm to 0.22 mm.

The edge of the intermediate connector 21 may be an edge, facing away from the first main portion 211, of the edge portion 213. If d4 is excessively small, it becomes more demanding to position the edge of the intermediate connector 21 during welding, and the acting position of the welding gun is more prone to deviate to the outside of the intermediate connector 21, resulting in an insufficiency or failure of the weld between the intermediate connector 21 to the housing 1, reducing the effect of weld sealing between the intermediate connector 21 and the housing 1. If d4 is excessively large, the size of the intermediate connector becomes excessively large, and is unfavorable for miniaturization of the battery cell. By setting d4 to range from 0.02 mm to 0.22 mm, this application reduces or avoids insufficiency or failure of the weld between the intermediate connector 21 and the housing 1.

In some embodiments, the intermediate connector 21 is provided with a first through-hole 214 in communication with the injection hole 11, the sealing member 22 is provided with a second through-hole 221 in communication with the injection hole 11, and the pressure relief member 23 covers the second through-hole 221.

The injection hole 11, the first through-hole 214, and the second through-hole 221 may be arranged coaxially. The accommodation space 14, the injection hole 11, the first through-hole 214, and the second through-hole 221 are connected sequentially. The diameter of the injection hole 11 may be greater than or equal to the diameter of the first through-hole 214, and the diameter of the first through-hole 214 is greater than the diameter of the second through-hole 221. When the battery cell is thermally runaway, the pressure relief passage formed by melting of the sealing member 22 communicates with the second through-hole 221, such that the pressure relief passage can expel high-pressure gas from the accommodation space 14.

In some embodiments, the projection of the sealing member 22 projected onto the intermediate connector 21 along the first direction X partially falls within the first through-hole 214.

The sealing member 22 and the intermediate connector 21 may be annular. The outer diameter Φ1 of the intermediate connector 21 is greater than the outer diameter Φ2 of the sealing member 22. In other words, the projection of an outer edge of the sealing member 22 projected onto the intermediate connector 21 along the first direction X lies inward of the outer edge of the intermediate connector 21. Consequently, the first projection of the sealing member 22 stacked on the intermediate connector 21 is spaced apart from the first weld mark portion 212. The inner diameter ψ1 of the intermediate connector 21 is greater than the inner diameter ψ1 of the sealing member 22, such that the projection of the sealing member 22 projected onto the intermediate connector 21 in the first direction X partially falls within the first through-hole 214, thereby improving the hermeticity of the sealing member 22 between the intermediate connector 21 and the pressure relief member 23.

In some embodiments, an edge of the sealing member 22 is located outward of a projection of the pressure relief member 23 projected onto the sealing member 22 along the first direction X.

The outer diameter Φ3 of the pressure relief member 23 is smaller than the outer diameter Φ2 of the sealing member 22, such that the edge of the sealing member 22 is located outward of the projection of the pressure relief member 23 projected onto the sealing member 22 along the first direction X. The pressure relief member 23 can be stacked on the sealing member 22, thereby ensuring effective sealing between the sealing member 22 and the pressure relief member 23. The outer diameter Φ3 of the pressure relief member 23 is greater than the inner diameter ψ1 of the sealing member 22, such that the pressure relief member 23 can cover the second through-hole 221 along the first direction X, thereby implementing sealing of the injection hole 11.

In some embodiments, a projection of the intermediate connector 21 projected onto the housing 1 along the first direction X partially falls within the injection hole 11.

The outer diameter Φ1 of the intermediate connector 21 is greater than the diameter r1 of the injection hole 11, such that the intermediate connector 21 can cover one side of the injection hole 11. The inner diameter ψ1 of the intermediate connector 21 is smaller than the diameter r1 of the injection hole 11, such that the projection of the intermediate connector 21 projected onto the housing 1 along the first direction X partially falls within the injection hole 11, thereby facilitating injection of an electrolyte into the accommodation space 14 through the injection hole 11. This arrangement also reduces the diameter of the first through-hole 214, the diameter of the second through-hole 221, and the size of the pressure relief member 23, and improves the hermeticity between the intermediate connector and the sealing member 22 and the hermeticity between the sealing member 22 and the pressure relief member 23. Furthermore, because the projection of the intermediate connector 21 projected onto the housing 1 along the first direction X partially falls within the injection hole 11, it is ensured that the hermeticity of the pressure relief assembly 2 is improved without adversely affecting electrolyte injection.

The diameter D1 of the injection hole 11 may range from 0.5 mm to 3 mm, thereby ensuring efficient electrolyte injection through the injection hole 11.

In some embodiments, the outer diameter Φ1 of the intermediate connector 21 ranges from 3 mm to 4 mm, the inner diameter ψ1 of the intermediate connector 21 ranges from 0.5 mm to 2 mm, and the thickness of the intermediate connector 21 along the first direction X ranges from 0.05 mm to 1.5 mm. The inner diameter ψ1 of the intermediate connector 21 is the diameter of the first through-hole 214. If the inner diameter ψ1 of the intermediate connector 21 is excessively large, a region of connection between the intermediate connector 21 and the housing 1 is increased, thereby being unfavorable for sealing between the intermediate connector 21 and the housing 1. If the inner diameter ψ1 of the intermediate connector 21 is excessively small, the diameter of the first through-hole 214 is reduced, thereby being unfavorable for pressure relief through the first through-hole 214 under a thermal runaway condition.

In an embodiment, an initial outer diameter of a sealing member 22 that is not bonded to an intermediate connector 21 or a pressure relief member 23 ranges from 2 mm to 4 mm, an initial inner diameter of the sealing member 22 ranges from 0.8 mm to 1.9 mm, and an initial thickness of the sealing member 22 along the first direction X ranges from 0.05 mm to 1.5 mm. The sealing member 22 is subjected to a hot-pressing process so that the sealing member 22 connects the intermediate connector 21 and the pressure relief member 23. The outer diameter Φ2 of the hot-pressed sealing member 22 ranges from 2.5 mm to 3.0 mm. The inner diameter ψ2 of the sealing member 22 ranges from 0.6 mm to 1.0 mm. The thickness of the sealing member 22 along the first direction X ranges from 0.03 mm to 0.07 mm. The inner diameter ψ2 of the sealing member 22 is the diameter of the second through-hole 221. If the inner diameter ψ2 of the sealing member 22 is excessively large, an area of connection between the sealing member 22 and the pressure relief member 23 is reduced, thereby being unfavorable for sealing between the sealing member 22 and the pressure relief member 23. If the inner diameter ψ2 of the sealing member 22 is excessively small, the diameter of the second through-hole 221 is reduced, and the molten sealing member 22 is prone to excessive adhesive overflow, making it difficult to form a pressure relief passage, and hindering pressure relief under a thermal runaway condition.

In an embodiment, the outer diameter Φ3 of the pressure relief member 23 ranges from 2 mm to 3 mm, and the thickness of the pressure relief member 23 along the first direction X ranges from 0.1 mm to 0.2 mm. An excessively large outer diameter Φ3 of the pressure relief member 23 is unfavorable for the molten sealing member 22 to form a pressure relief passage, and hinders pressure relief under a thermal runaway condition. An excessively small outer diameter Φ3 of the pressure relief member 23 reduces an area available, on the pressure relief member 23, for connecting to the sealing member 22, thereby being unfavorable for sealing between the sealing member 22 and the pressure relief member 23.

The outer diameter Φ1 of the intermediate connector 21 is 3.4 mm, the inner diameter ψ1 of the intermediate connector 21 is 1 mm, and the thickness of the intermediate connector 21 along the first direction X is 0.08 mm. The outer diameter Φ2 of the sealing member 22 is 2.2 mm, the inner diameter ψ2 of the sealing member 22 is 1.2 mm, and the thickness of the sealing member 22 along the first direction X is 0.08 mm. The outer diameter Φ3 of the pressure relief member 23 is 2.5 mm, and the thickness of the pressure relief member 23 along the first direction X is 0.08 mm. The diameter D1 of the injection hole 11 ranges from 1 mm to 2 mm. An initial outer diameter of the sealing member 22 that is not bonded to an intermediate connector 21 or a pressure relief member 23 is 2.2 mm, an initial inner diameter of the sealing member 22 is 1.2 mm, and an initial thickness of the sealing member 22 along the first direction X is 0.08 mm.

The sealing member 22 may be a single-layer structure or a multilayer structure. The single-layer structure refers to a sealing member 22 prepared from a single material, such that every part of the sealing member 22 melts at the same melting point. The multilayer structure refers to a sealing member 22 prepared from different materials, such that different layers differ in melting point.

In some embodiments, the sealing member 22 is a single-layer structure, and the melting point of the sealing member 22 is 123±5 °C.

In some embodiments, the sealing member 22 is a double-layer structure, including a first adhesive layer 224 and a second adhesive layer 222. The first adhesive layer 224 is located on one side, close to the intermediate connector 21, of the second adhesive layer 222. The melting point of the first adhesive layer 224 is 123±5 °C.

Referring to FIG. 6, in some embodiments, the sealing member 22 includes a first adhesive layer 224, a second adhesive layer 222, and a third adhesive layer 223 sequentially arranged along the first direction X. The melting point of the second adhesive layer 222 is higher than the melting point of the first adhesive layer 224. The melting point of the second adhesive layer 222 is higher than the melting point of the third adhesive layer 223.

The first adhesive layer 224 and the third adhesive layer 223 may be made of the same material. Optionally, the melting points of the first adhesive layer 224 and the third adhesive layer 223 are 123±5 °C. The melting point of the second adhesive layer 222 is 145±10 °C. In the event of thermal runaway, the first adhesive layer 224 and the third adhesive layer 223 melt prior to the second adhesive layer 222, such that the second adhesive layer 222 can support the first adhesive layer 224 and the third adhesive layer 223. When the first adhesive layer 224 melts, a pressure relief passage is formed between the second adhesive layer 222 and the intermediate connector 21. When the third adhesive layer 223 melts, a pressure relief passage is formed between the second adhesive layer 222 and the pressure relief member 23.

Referring to FIG. 7, in some embodiments, a maximum length of the pressure relief assembly 2 along the second direction Y is greater than a maximum length of the pressure relief assembly 2 along the third direction Z. The first direction X, the second direction Y, and the third direction Z are perpendicular to each another.

A reference plane defined by the second direction Y and the third direction Z may be parallel to the housing wall 12 on which the injection hole 11 is formed. The pressure relief assembly 2 may be rectangular. A maximum length of the pressure relief assembly 2 along the second direction Y is greater than a maximum length along the third direction Z. The third direction Z may be the thickness direction of the battery cell.

The pressure relief assembly 2 is set in such a way that the maximum length along the second direction Y is greater than the maximum length along the third direction Z, so as to increase the contact area between the pressure relief assembly 2 and the housing 1. The length of the intermediate connector 21 in the third direction Z may range from 1.0 mm to 6 mm. Optionally, the length of the intermediate connector 21 in the third direction Z ranges from 1.0 mm to 3.5 mm. The length of the housing 1 along the third direction Z may range from 1.1 mm to 5 mm, and the thickness of the housing wall 12 along the first direction X may range from 0.075 mm to 0.20 mm.

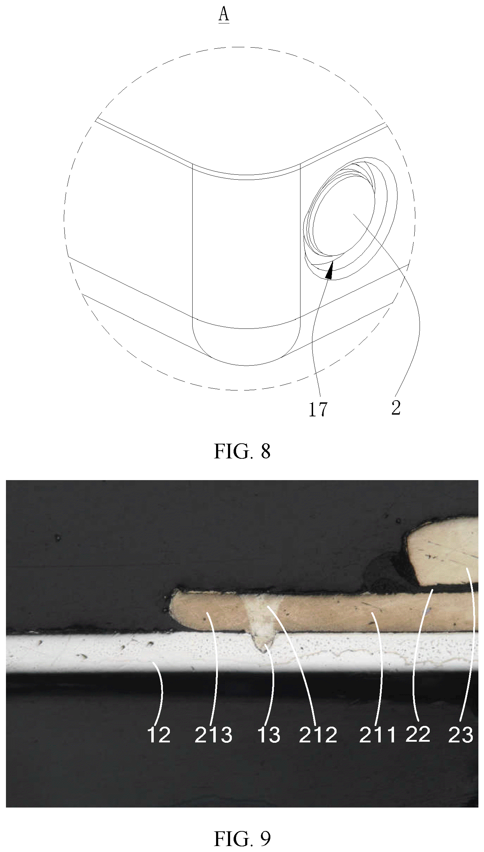

Referring to FIG. 8, in some embodiments, the housing 1 is provided with a recess 17. The recess 17 is recessed toward the battery cell relative to the outer surface of the housing 1. The injection hole 11 is formed in the recess 17. The pressure relief assembly 2 is disposed in the recess 17. A surface, facing away from the intermediate connector, of the pressure relief member 23 is coplanar with the outer surface of the housing 1; or, a surface, facing away from the intermediate connector, of the pressure relief member 23 is located on one side of the outer surface of the housing 1, the side being close to the battery cell.

Referring to FIG. 9, which shows an SEM image of a partial cross-sectional structure of a battery cell, as shown in FIG. 9, through laser welding, a first weld mark portion 212 may be formed on the intermediate connector 21 and a second weld mark portion 13 may be formed in the housing 1.

According to a second aspect, this application further provides an electrical device. As shown in the figure, the electrical device includes the battery cell according to the first aspect. The battery cell is configured to provide electrical energy.

There may be a plurality of battery cells. The plurality of battery cells may be connected in series, parallel, or series-and-parallel pattern to form a whole. The whole of the battery cells are charged from and discharged to an external circuit. The series-and-parallel pattern means a combination of series connection and parallel connection of the plurality of battery cells.

The specific type of the electrical device may be, for example, but is not limited to, a mobile terminal, a smart wearable device, an electric tool, an electric vehicle, or a portable power supply.

Because the battery cell produces the foregoing beneficial effects, the electrical device exhibits high operational safety and reliability.

The foregoing beneficial effects are further illustrated by the following embodiments and comparative embodiments.

Battery cells are prepared using the parameters shown in Table 1, Table 2, and Table 3. Unless otherwise specified, in Embodiments 1 to 26 and Comparative Embodiment 1, the intermediate connector, the sealing member, and the pressure relief member are arranged coaxially. The width of the second surface 2122 is d1, the minimum spacing between the first projection and the first weld mark portion 212 is d3, the width of the first surface 2122 is d2, and the minimum spacing between the edge of the intermediate connector 21 and the first weld mark portion 212 is d4.

The prepared battery cells are subjected to a bonding strength test. The housing 1 is fixed. Through an ejector pin matched to the injection hole 11, different pushing forces F1 are applied to the intermediate connector 21 to measure the bonding strength between the intermediate connector 21 and the housing 1. The housing 1 and the intermediate connector 21 are then fixed, and through an ejector pin matched to the injection hole 11, a pushing force F2 is applied to the pressure relief member 23 to measure the bonding strength of the sealing member 22 connecting the intermediate connector 21 and the pressure relief member 23. For each embodiment and each comparative embodiment, 100 battery cells are prepared and tested under the same conditions. The bonding strength of the battery cells in each group is measured, and the average value is recorded as the bonding strength of the corresponding embodiment or comparative embodiment.

The prepared battery cells are subjected to a high-temperature/high-humidity test. A fully charged battery cell is stored under open-circuit conditions for 42 days at (65±2) °C and a relative humidity of 90% to 95%. Every 7 days, the battery cell is taken out to check whether electrolyte leakage occurs. If no electrolyte leakage is observed, the fully charged battery cell is recorded as having passed the test. For each embodiment and each comparative embodiment, 100 battery cells are prepared and tested under the same conditions. The percentage of battery cells in each group that pass the test is calculated and recorded as the high-temperature/high-humidity test pass rate.

**Table 1**

| | d1 | d3 | d4 | d1+d3+d4 | F1 | F2 | High-temperature and high-humidity test pass rate |
|---|---|---|---|---|---|---|---|
| | (µm) | (µm) | (µm) | (µm) | (N) | (N) | |
| Embodiment 1 | 100 | 20 | 50 | 170 | 40 | 35 | 90% |
| Embodiment 2 | 100 | 50 | 50 | 210 | 40 | 37 | 92% |
| Embodiment 3 | 100 | 100 | 50 | 250 | 40 | 38 | 95% |
| Embodiment 4 | 100 | 140 | 50 | 290 | 40 | 39 | 97% |
| Embodiment 5 | 100 | 160 | 50 | 310 | 40 | 40 | 97% |
| Embodiment 6 | 100 | 180 | 50 | 330 | 40 | 40 | 97% |
| Embodiment 7 | 100 | 220 | 50 | 390 | 40 | 42 | 98% |
| Embodiment 8 | 100 | 250 | 50 | 400 | 40 | 42 | 98% |
| Comparative Embodiment 1 | 100 | 0 | 50 | 150 | 40 | 25 | 85% |
| Embodiment 9 | 100 | 10 | 50 | 160 | 40 | 30 | 88% |
| Embodiment 10 | 100 | 260 | 50 | 410 | 40 | 42 | 98% |

F2 represents the bonding strength of the sealing member 22 connecting the intermediate connector 21 and the pressure relief member 23. As can be seen from Embodiments 1 to 8, with d1 and d4 being constant, F2 increases with the increase of d3. This indicates that a larger spacing between the sealing member 22 and the first weld mark portion 212 leads to higher bonding strength of the sealing member 22 connecting the intermediate connector 21 and the pressure relief member 23, and more stable structure of the pressure relief assembly 2. With the increase of d3, the electrolyte leakage test pass rate of the battery cells under high-temperature/high-humidity conditions increases, and the safety of the battery cell is higher.

In Comparative Embodiment 1, d3 is 0, such that the first weld mark portion 212 formed by welding the intermediate connector 21 to the housing 1 along the edge of the sealing member 22 is arranged along the edge of the sealing member 22. As can be seen from Comparative Embodiment 1 versus Embodiment 1, when the first weld mark portion 212 is not spaced apart from the first projection of the sealing member 22, F2 is relatively low, and the electrolyte leakage test pass rate is low. This indicates that the formation of the first weld mark portion 212 adversely affects the sealing member 22, resulting in inferior bonding strength of the sealing member 22 connecting the intermediate connector 21 and the pressure relief member 23, and leading to low safety of the battery cell.

As can be seen from Embodiment 1 versus Embodiment 9, when d3 is less than 20 µm, F2 decreases, indicating that the welding process adversely affects the structure of the sealing member 22. The electrolyte leakage test pass rate of the battery cells under high-temperature/high-humidity conditions is less than 90%, indicating poor safety of the battery cells. As can be seen from Embodiment 8 versus Embodiment 10, when d3 is greater than 250 µm, F2 remains unchanged, and the electrolyte leakage test pass rate of the battery cells under high-temperature/high-humidity conditions remains unchanged. This indicates that, once d3 exceeds 250 µm, a further increase in d3 produces no effect on F2 or on the electrolyte leakage test pass rate. The greater the value of d1+d3+d4, the larger the outer diameter of the intermediate connector 21, which is unfavorable for miniaturization of the pressure relief assembly.

**Table 2**

| | d1 | d3 | d4 | d1+d3+d4 | F1 | F2 | High-temperature and high-humidity test pass rate |
|---|---|---|---|---|---|---|---|
| | (µm) | (µm) | (µm) | (µm) | (N) | (N) | |
| Embodiment 4 | 100 | 140 | 50 | 290 | 40 | 39 | 97% |
| Embodiment 11 | 70 | 140 | 50 | 260 | 37 | 39 | 92% |
| Embodiment 12 | 80 | 140 | 50 | 270 | 38 | 39 | 93% |
| Embodiment 13 | 90 | 140 | 50 | 280 | 39 | 39 | 95% |
| Embodiment 14 | 120 | 140 | 50 | 310 | 41 | 39 | 97% |
| Embodiment 15 | 140 | 140 | 50 | 330 | 42 | 39 | 97% |
| Embodiment 16 | 150 | 140 | 50 | 340 | 43 | 39 | 98% |
| Embodiment 17 | 160 | 140 | 50 | 350 | 43 | 39 | 98% |
| Embodiment 18 | 60 | 140 | 50 | 250 | 35 | 39 | 88% |

F1 represents the strength of bonding between the intermediate connector 21 and the housing 1. As can be seen from Embodiments 4 and 11 to 16, with d3 and d4 being constant, F1 increases with the increase of d1. This indicates that a larger width of the second surface 2122 leads to higher bonding strength between the intermediate connector 21 and the housing 1, and more stable connection between the pressure relief assembly 2 and the housing 1. With the increase of d1, the electrolyte leakage test pass rate of the battery cells under high-temperature/high-humidity conditions increases, and the safety of the battery cell is higher.

As can be seen from Embodiment 16 versus Embodiment 17, when d1 is greater than 150 µm, F1 keeps increasing, but the electrolyte leakage test pass rate of the battery cells under high-temperature/high-humidity conditions remains unchanged. This indicates that, once d1 exceeds 150 µm, a further increase in d3 produces little effect on the electrolyte leakage test pass rate. The greater the value of d1+d3+d4, the larger the outer diameter of the intermediate connector 21, which is unfavorable for miniaturization of the pressure relief assembly. As can be seen from Embodiment 11 versus Embodiment 18, when d1 is less than 60 µm, F1 decreases. The electrolyte leakage test pass rate of the battery cells under high-temperature/high-humidity conditions is less than 90%, indicating poor safety of the battery cells.

**Table 3**

| | d1 | d2 | F1 | F2 | High-temperature and high-humidity test pass rate |
|---|---|---|---|---|---|
| | (µm) | (µm) | (N) | (N) | |
| Embodiment 19 | 100 | 30 | 40 | 39 | 94% |
| Embodiment 20 | 100 | 40 | 41 | 39 | 94% |
| Embodiment 21 | 100 | 50 | 42 | 39 | 95% |
| Embodiment 22 | 100 | 60 | 42 | 39 | 97% |
| Embodiment 23 | 100 | 70 | 42 | 39 | 96% |
| Embodiment 24 | 100 | 80 | 43 | 39 | 94% |
| Embodiment 25 | 100 | 90 | 44 | 39 | 86% |
| Embodiment 26 | 100 | 20 | 25 | 39 | 85% |

As can be seen from Embodiments 19 to 24, with d1 being constant, F1 increases with the increase of d2. This indicates that a larger width of the first surface 2122 leads to higher bonding strength between the intermediate connector 21 and the housing 1, and more stable connection between the pressure relief assembly 2 and the housing 1. As can be seen from Embodiments 26 and 19 to 22, when d2 ranges from 20 µm to 60 µm, with the increase of d2, the electrolyte leakage test pass rate of the battery cells under high-temperature/high-humidity conditions increases, and the safety of the battery cell is higher. As can be seen from Embodiments 22 to 25, when d2 ranges from 60 µm to 90 µm, with the increase of d2, the electrolyte leakage test pass rate of the battery cells under high-temperature/high-humidity conditions is lower, and the safety of the battery cells is lower. This indicates that, when d2 exceeds a specified threshold, the welding process adversely affects the structure of the sealing member 22, thereby impairing the safety of the battery cells under high-temperature/high-humidity conditions.

As can be seen from Embodiment 25 versus Embodiment 26, when d3 is less than 250 µm or d3 is greater than 250 µm, the electrolyte leakage test pass rate of the battery cells under high-temperature/high-humidity conditions is less than 90%, indicating poor safety of the battery cells.

Moreover, in this specification, the term "and/or" is merely used to describe an association relationship between associated objects, and indicates that three relationships may exist. For example, A and/or B may indicate the following: Only A exists, both A and B exist, and only B exists. In addition, the character "/" herein generally indicates an "or" relationship between the item preceding the character and the item following the character.

Understandably, in embodiments of this application, "B corresponding to A" indicates that B is associated with A, and B can be determined based on A. It is also understandable that determining B based on A does not mean that B is determined solely based on A; rather, B may be determined based on A and/or other information.

The above descriptions are merely some specific embodiments of this application, but the protection scope of this application is not limited to such embodiments. Various equivalent modifications and replacements easily conceivable by any person skilled in the art without departing from the technical scope disclosed herein still fall within the protection scope of this application. Therefore, the protection scope of this application is subject to the protection scope of the claims.

## Claims

1. A battery cell, **characterized in that** the battery cell comprises:
a housing, defining an accommodation space, and provided with an injection hole in communication with the accommodation space; and
a pressure relief assembly, covering the injection hole, wherein the pressure relief assembly comprises an intermediate connector, a sealing member, and a pressure relief member; the housing, the intermediate connector, the sealing member, and the pressure relief member are sequentially stacked along a first direction; the intermediate connector comprises a first main portion and a first weld mark portion; a projection of the sealing member projected onto the intermediate connector along the first direction is a first projection, and the first projection lies within the first main portion; the first weld mark portion is disposed around a periphery of the first projection; the first weld mark portion is spaced apart from the first projection; and the first weld mark portion is welded to the housing.

2. The battery cell according to claim 1, **characterized in that** a minimum spacing between the first projection and the first weld mark portion is d3, and d3 ranges from 0.02 mm to 0.25 mm.

3. The battery cell according to claim 2, **characterized in that** d3 ranges from 0.05 mm to 0.18 mm.

4. The battery cell according to any one of claims 1 to 3, **characterized in that** the intermediate connector further comprises an edge portion; and the first main portion, the first weld mark portion, and the edge portion are sequentially arranged from inside outward.

5. The battery cell according to any one of claims 1 to 3, **characterized in that** the housing comprises a housing wall and a second weld mark portion, and the second weld mark portion is embedded in the housing wall and is connected to the first weld mark portion.

6. The battery cell according to claim 5, **characterized in that** the first weld mark portion comprises a first surface close to the housing and a second surface facing away from the housing, and a projection of the first surface along the first direction lies within a projection of the second surface along the first direction.

7. The battery cell according to claim 6, **characterized in that** the projection of the first surface along the first direction covers the second weld mark portion.

8. The battery cell according to claim 7, **characterized in that** a dimension of the first weld mark portion along a second direction is a width of the first weld mark portion, the width of the first weld mark portion gradually decreases along a direction from the pressure relief member toward the housing, a dimension of the second weld mark portion along the second direction is a width of the second weld mark portion, the width of the second weld mark portion gradually decreases along the direction from the pressure relief member toward the housing, and the second direction is perpendicular to the first direction.

9. The battery cell according to claim 8, **characterized in that** a width of the second surface is d1, and d1 ranges from 70 µm to 150 µm.

10. The battery cell according to claim 8, **characterized in that** a width of the surface, facing away from the housing, of the second weld mark portion is d2, and d2 ranges from 30 µm to 80 µm.

11. The battery cell according to claim 5, **characterized in that** a length of the second weld mark portion along the first direction is H2, a length of the housing wall along the first direction is H3, and H2 and H3 satisfy 30 µm ≤ H2 ≤ 0.8 × H3.

12. The battery cell according to any one of claims 1 to 3, **characterized in that** a minimum spacing between an edge of the intermediate connector and the first weld mark portion is d4, and d4 ranges from 0.02 mm to 0.22 mm.

13. The battery cell according to any one of claims 1 to 3, **characterized in that** the intermediate connector is provided with a first through-hole in communication with the injection hole, the sealing member is provided with a second through-hole in communication with the injection hole, and the pressure relief member covers the second through-hole.

14. The battery cell according to claim 13, **characterized in that** the projection of the sealing member projected onto the intermediate connector along the first direction partially falls within the first through-hole.

15. The battery cell according to any one of claims 1 to 3, **characterized in that** an edge of the sealing member is located outward of a projection of the pressure relief member projected onto the sealing member along the first direction.

16. The battery cell according to any one of claims 1 to 3, **characterized in that** a projection of the intermediate connector projected onto the housing along the first direction partially falls within the injection hole.

17. The battery cell according to any one of claims 1 to 3, **characterized in that** an outer diameter of the sealing member ranges from 2.5 mm to 3.0 mm, an inner diameter of the sealing member ranges from 0.6 mm to 1.0 mm, and a thickness of the sealing member along the first direction ranges from 0.03 mm to 0.07 mm.

18. The battery cell according to any one of claims 1 to 3, **characterized in that** the sealing member comprises a first adhesive layer, a second adhesive layer, and a third adhesive layer sequentially arranged along the first direction; a melting point of the second adhesive layer is higher than a melting point of the first adhesive layer; and the melting point of the second adhesive layer is higher than a melting point of the third adhesive layer.

19. An electrical device, **characterized in that** the electrical device comprises the battery cell according to any one of claims 1 to 18, and the battery cell is configured to provide electrical energy.
